(19) Europäisches Patentamt
European Patent Office
Office européen des brevets

(11)  **EP 2 251 984 B1**

(12)  **EUROPEAN PATENT SPECIFICATION**

(45) Date of publication and mention
of the grant of the patent:
**05.10.2011 Bulletin 2011/40**

(51) Int Cl.:
*H04B 1/10* *(2006.01)*        *H04B 1/16* *(2006.01)*

(21) Application number: **09006348.8**

(22) Date of filing: **11.05.2009**

(54) **Signal analysis for an improved detection of noise from an adjacent channel**

Signalanalyse zur verbesserten Erkennung von Geräuschen aus einem benachbarten Kanal

Analyse de signal pour la détection améliorée du bruit d'un canal adjacent

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**17.11.2010 Bulletin 2010/46**

(73) Proprietor: **Harman Becker Automotive Systems
GmbH
76307 Karlsbad (DE)**

(72) Inventors:
• **Axtmann, Olaf
76135 Karlsruhe (DE)**
• **Schmauderer, Philipp
75339 Höfen (DE)**
• **Benz, Christoph
77797 Ohlsbach (DE)**
• **Körner, Andreas
76337 Waldborn (DE)**

(74) Representative: **Grünecker, Kinkeldey,
Stockmair & Schwanhäusser
Anwaltssozietät
Leopoldstrasse 4
80802 München (DE)**

(56) References cited:
**US-A- 5 307 515    US-A- 5 564 093
US-A- 5 631 963    US-B1- 6 738 606**

## Description

## FIELD OF THE INVENTION

The invention relates to a method for receiving a frequency modulated radio signal, and in particular to an improved usage of dynamic selection in a radio receiver to filter out noise from adjacent channels. Furthermore, the invention also relates to a radio receiver that is adapted to perform said method.

## TECHNICAL BACKGROUND

In telecommunications, frequency modulation (FM) conveys information over a carrier wave by varying its frequency, in contrast to amplitude modulation (AM), in which the amplitude of the carrier is varied while its frequency remains constant. Since FM is more robust against noise and interference than AM, FM is more widely used.

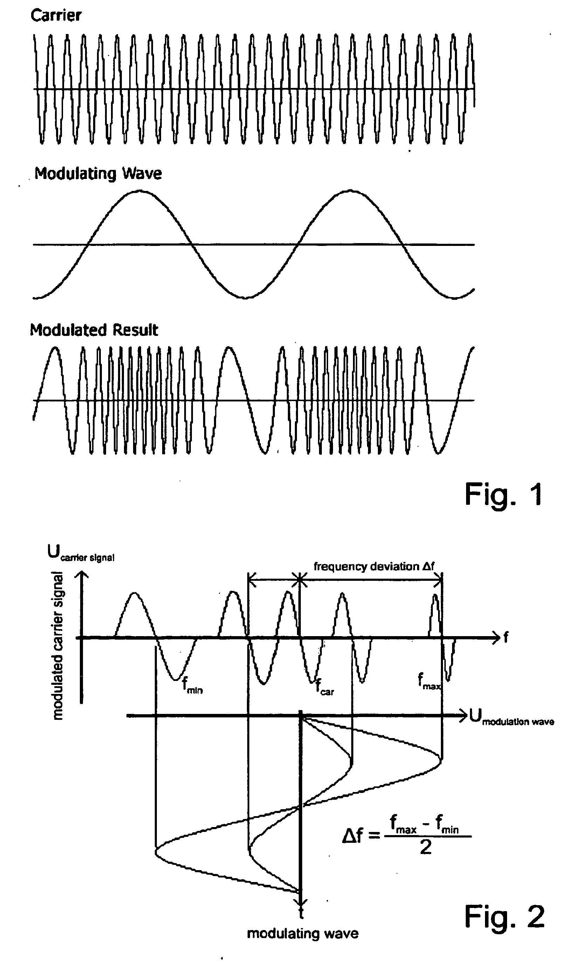

In FM, the low frequency modulation signal (information signal) is used to vary the high carrier frequency of the carrier signal. As exemplified in Fig. 1, in which the carrier wave, the modulating wave and the modulated result are confronted, the sign of the modulating wave defines whether the carrier frequency is decreased or increased, and the amplitude of the modulating wave defines by which amount the carrier frequency varies. For instance, the positive part of the modulating wave leads to an increase of the carrier frequency, while the negative part of the modulating wave leads to a decrease of the carrier frequency, as can be appreciated from the modulated result diagram of Fig. 1.

Fig. 2 also confronts the modulating wave with the resulting modulated carrier signal, and illustrates the correspondence between a large/small amplitude of the modulating signal and the resulting modulated carrier signal frequency change. In more detail, Fig. 2 shows two modulating signals having different amplitudes, and the resulting modulated carrier signals. As apparent therefrom, the amplitude of the modulating signal determines the amount of frequency deviation of the carrier signal. Put differently, the carrier signal continuously runs through all frequencies between the two boundary frequency values.

At the zero-crossing point of the modulating wave, the unmodulated carrier frequency signal is present for a moment.

The term frequency deviation ($\Delta f$) is used in FM radio to describe the maximum instantaneous difference between an FM modulated frequency and the nominal carrier frequency, and thus represents the maximum shift away from the carrier frequency in one direction. The term is sometimes mistakenly used as synonymous with frequency drift, which however is an unintended offset of an oscillator from its nominal frequency.

Frequency modulation is widely applied for broadcasting audios signals such as music and voice which fall in the audio spectrum, however can be also applied to video signalling or other data. The full audio spectrum ranges from 20 to 20,000 Hz, but FM radio limits the upper modulating frequency to 15 kHz (as compared to AM radio which limits the upper frequency to 5 kHz).

FM-stereo broadcasting enables the audio transmission in stereo by broadcasting both the Left and the Right Channel of a Stereo Broadcast on the same FM channel. The process of combining multiple signals onto one composite signal in such a way that the original signals can be reconstituted by the receiver is called Multiplexing. The Stereo Multiplexed signal (MPX) was to be compatible with the earlier Mono FM Radios; thus, the lower part of the Stereo MPX signal (0-15kHz) should contain, as hitherto, the sum of the Left and Right channels, i.e. L+R, for continued mono reception.

In addition, an L-R signal is transmitted as part of the MPX signal using a Double sideband suppressed carrier (DSBSC) modulation, which is an AM modulation, in order for the receiver to determine the Left and Right Channel as follows. If the receiver adds the L+R signal to the L-R signal, it gets 2L i.e. the Left channel signal amplified two times. If the receiver subtracts L+R from the L-R signal, it gets 2R, i.e. the Right channel signal amplified two times.

Since audio signals up to 15 kHz are to be transmitted with the MPX signals, it is necessary to use a carrier frequency of the MPX signal higher than 30 kHz. A carrier frequency of 38 kHz was chosen, whereas the actual carrier signal of 38 kHz is eliminated. Instead, a Pilot Signal at 19 kHz (=38/2 kHz) is inserted into the MPX signal, so as to inform the radio receiver that the signal is stereo and at the same time to enable the radio receiver to re-generate the 38 kHz carrier signal with the correct phase using a simple frequency doubler.

The AM modulation of the L-R signal at the carrier frequency of 38 kHz results in two side bands having the bandwidth of the maximum audio frequency of 15 kHz, i.e. 23-38 kHz and 38-53 kHz.

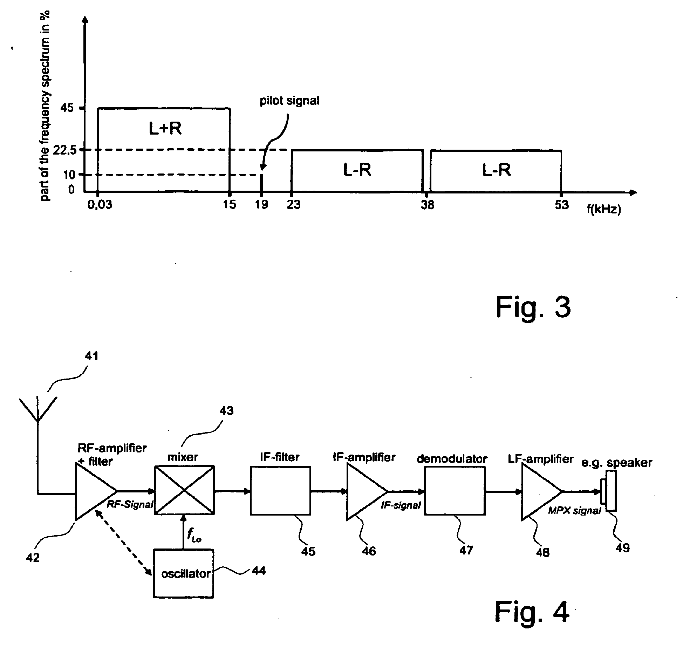

As can be seen in Fig. 3, the FM MPX-signal comprises the L+R (mono) signal up to 15 kHz, a pilot signal at 19 kHZ, and the L-R signal, which ranges from 23 to 53 kHz, wherein the complete FM MPX signal is used for frequency modulating the FM carrier signal.

Throughout the world, the broadcast band falls within the very high frequency (VHF; in Germany: UltraKurzWelle, UKW) part of the radio spectrum, usually 87.5 - 108.0 MHz, with few exceptions.

The frequency deviation of a radio signal is of particular importance in relation to bandwidth, because less deviation means that more channels can fit into the same amount of frequency spectrum. The FM broadcasting (e.g. 87.5-108 MHz) uses a channel spacing of 100 kHz, with a maximum frequency deviation of 75 kHz, leaving a 25 kHz buffer above and below the center frequency to reduce interaction with other channels.

The bandwidth of the FM MPX signal may be predicted using:

$$BW \approx 2^* \, (\Delta f + f_{audio})$$

where $f_{audio}$ is the maximum modulating frequency of 15 kHz and $\Delta f$ is 75 kHz. This results in a bandwidth of about 180 kHz.

Apparently, a channel spacing of -200 kHz or more is necessary to avoid overlapping of the frequencies of the two adjacent channels. However, bearing in mind that the FM broadcasting has a low distance range, the channel spacing of 100 kHz allows to have two adjacent channels in distant regions, because the signal energy of one channel is usually too low to lead to noise in the other channel when both are distant from each other.

In spite of these provisions, an adjacent radio station might still cause interference in another signal, especially when the carrier frequencies are nearby and the signal strength of the adjacent radio channel is large enough compared to the signal strength of the actual signal.

In order to attenuate noise coming from an adjacent radio station, it is thus first necessary to determine when the signal is indeed affected by noise, and when not, and when noise is present, to eliminate same as much as possible. It is however important to securely determine the presence of noise, since in case the radio signal is wrongly determined to have interference from an adjacent channel or another source, the means for eliminating said interference would unnecessarily worsen the quality of the received signal. The impact of the wrongly applied noise elimination varies depending on the kind of noise elimination used.

US 6 738 606 B1 discloses an FM receiver which controls the IF filter depending on a first input signal of a received RF level signal and depending on a second input signal of a demodulated signal. Control means CM2 are provided for receiving signals SrF2 and Smpx2. An RF level detector analyzes the Srf2 signal and outputs a measure of the field strength at the antenna input of the FM receiver. The adjacent channel filter ACF2 receives the Smpx2 signal and outputs a measure of the adjacent channel signal. An offset detector measures the frequency offset as a DC voltage, thus improving the possibilities to detect a neighbor channel signal.

## SUMMARY OF THE INVENTION

One object of the invention is to provide a method for receiving radio signals, in which noise from adjacent channels can be securely identified, so as to improve the noise elimination.

The object is solved by the subject matter of the independent claims. Advantageous embodiments of the invention are subject matters of the dependent claims.

One aspect of the invention is to separately determine the frequency deviation above and below the carrier/intermediate frequency so as to detect noise from an adjacent channel. In case the frequency deviation above the carrier/intermediate frequency is substantially different from the one below the carrier/intermediate frequency, the radio is affected by noise from an adjacent channel.

In comparison thereto, a large frequency deviation would generate essentially the same frequency deviation above and below the carrier/intermediate frequency. Therefore, noise from an adjacent channel may be easily distinguished from a large frequency deviation. Advantageously, bearing in mind that with frequency modulation the extent of the frequency deviation corresponds to the amplitude of the demodulated signal, it is possible to determine the presence of noise from an adjacent channel by separately determining the positive and negative amplitude of the demodulated FM MPX signal and by then comparing same with each other. In case the positive amplitude is substantially different from the negative amplitude, the radio signal is affected by noise from an adjacent channel.

One embodiment of the present invention provides a method for receiving a frequency modulated radio signal on a radio channel at a particular center frequency. Further, the method determines whether the radio channel is affected by noise from an adjacent radio channel, the result of the determination being usable for the elimination of the noise in the radio signal. Over a pre-determined part of the received radio signal the extent of the frequency deviation above the center frequency and the extent of the frequency deviation below the center frequency is determined. In case the frequency deviation extent below the center frequency is substantially different from the frequency deviation extent above the center frequency, it is determined that the radio signal is affected by noise from an adjacent radio channel.

According to an advantageous embodiment of the invention, a large frequency deviation of the radio signal from the center frequency is to be distinguished from noise from an adjacent radio channel affecting the radio signal. In case the frequency deviation extent below the center frequency is substantially the same as the frequency deviation extent above the center frequency, it is determined that the radio signal has a large frequency deviation.

A further embodiment of the invention provides a method for receiving a frequency modulated radio signal on a radio channel. Furthermore, the method determines whether the radio channel is affected by noise from an adjacent radio channel, the result of the determination being usable for the elimination of the noise in the radio signal. The received radio signal is demodulated into an information signal. Over a pre-determined part of the information signal the extent of the positive amplitude of the information signal and the extent of the negative amplitude of the information signal is determined. In case the extent of the positive amplitude is substantially different from the extent of the negative amplitude, the radio signal is affected by noise from an adjacent radio channel.

According to another embodiment of the invention, a large frequency deviation from a center frequency used for frequency modulating the radio signal is to be distinguished from noise from an adjacent radio channel affecting the radio signal. To said end, in case the extent of the positive amplitude is substantially the same as the extent of the negative amplitude, it can be inferred that the radio signal has a large frequency deviation.

In an advantageous embodiment of the invention the difference between the extent of the positive amplitude and the negative amplitude is compared against a threshold. Then, in case the threshold is exceeded, the radio signal has a large frequency deviation.

Relating to a more detailed embodiment of the invention, a band pass filter with a pre-determined frequency band around the center frequency of the radio signal is provided to filter noise from an adjacent radio channel out of the radio signal. In case it is determined that the radio signal is affected by noise from an adjacent radio channel, the band pass filter is changed to a second frequency band around the center frequency, wherein the second frequency band is narrower than the pre-determined frequency band.

With regard to another embodiment of the invention, in case it is determined that the radio signal has a large frequency deviation, the pre-determined frequency band of the band pass filter is maintained and not changed.

According to an advantageous embodiment of the invention, interferences of the radio signal are blanked out before determining the extent of positive and negative amplitude.

Said embodiments of the invention may be used in a superheterodyne receiver.

In a further embodiment of the invention, the center frequency is an intermediate frequency, obtained by mixing a carrier frequency of the radio signal with a pre-determined second frequency, or a carrier frequency of the radio signal.

One embodiment of the invention further provides a radio receiver for receiving a frequency modulated radio signal via a radio channel, in which one of the above inventive methods is used.

## BRIEF DESCRIPTION OF THE FIGURES

In the following, the invention is described in more detail with reference to the attached figures and drawings. Similar or corresponding details in the figures are marked with the same reference numerals.

**Fig. 1**    shows three wave diagrams confronting a carrier wave, a modulating wave and the resulting modulated wave,

**Fig. 2**    shows a frequency modulated carrier signal and the corresponding modulating wave,

**Fig. 3**    illustrates the composition of an FM stereo multiplex signal, including a mono, a stereo and a pilot signal,

**Fig. 4**    depicts a diagram of a superheterodyne radio receiver, which uses an intermediate frequency to demodulate the radio signal,

**Fig. 5**    shows an oscilloscope output of an FM MPX signal, for which a large frequency deviation has been used for frequency modulation, however without suffering from any interference from an adjacent channel, and

**Fig. 6**    shows another oscilloscope output of an FM MPX signal, for which a "normal" frequency deviation has been used for frequency modulation but including interference from an adjacent channel.

## DETAILED DESCRIPTION OF THE INVENTION

The following paragraphs will describe various embodiments of the invention. The invention is however not restricted thereto and may be applied to other technical fields too, as apparent to a person skilled in the art.

A tuned radio frequency receiver (TRF receiver) is a radio receiver that is usually composed of several tuned high radio frequency amplifiers followed by circuits to detect and amplify the audio signal. A three-stage TRF receiver includes an RF stage for high frequencies, a detector stage and an audio stage. Generally, two or three RF amplifiers are required to filter and amplify the received frequency signal to a level sufficient to drive the detector stage. The detector converts RF signals directly to information, and the audio stage amplifies the information signal to a usable level. In tuned radio frequency receivers the selection of the desired frequency is based on the frequency selection of the high frequency circuitry. At high frequencies however it is difficult to achieve good results for the selectivity, since the necessary filters are expensive and limited in their performance.

The superhet radio (also called by its full name the superheterodyne receiver) is a further development to the tuned radio frequency receiver and is by now one of the most popular forms of receiver used today in a variety of applications from broadcast receivers to two way radio communication links as well as many mobile radio communication systems. The idea of the superhet receiver revolves around the process of mixing to generate a lower intermediate frequency (IF) than the original frequency prior to processing. This is done by (super) heterodyning, i.e. by mixing two frequencies to produce the difference frequency between the two. The superheterodyne receiver changes the RF frequency into an easier to process lower intermediate frequency. This intermediate frequency will be amplified and demodulated to get the information signal.

This process will be explained in more detail in the following with reference to Fig. 4, which discloses a diagram of the superheterodyne receiver, and specifically the circuits therein.

The radio signal is received via the antenna 41, then preselected and amplified in the high frequency amplifier and filter 42. A preselection takes place, so that only frequencies within the desired reception band are amplified, while filtering the rest.

The mixer 43 mixes the RF-signal with a signal $f_{Lo}$ from the local oscillator 44, thus generating several new frequencies. Depending on the quality of the mixer 43, these include the original frequency and the sum and the difference of the original and the oscillator frequency. Usually, the difference signal is used as the intermediate frequency IF. The desired reception band of the preselection by the RF-amplifier and filter (which includes the carrier frequency used for the frequency modulation of the RF-signal) is controlled together with the frequency $f_{Lo}$ used at the local oscillator, so as to always achieve the same difference frequency by the mixer, i.e. the same intermediate frequency, usually e.g. ~10.7 MHz.

The intermediate frequency filter, IF-filter 45, is a band-pass filter allowing only a small band of frequencies around its frequency to pass. Then, the filtered signal is amplified by the IF-amplifier 46 for further processing in the demodulator 47, at which the information signal (low frequency signal, LF-signal) is demodulated from the IF-signal.

These IF stages 45, 46 contain most of the amplification in the receiver as well as the filtering that enables signals on one frequency to be separated from those on the next frequency. Due to the lower IF-frequency, on which the processing is carried out, the amplification and filtering can be done more accurately.

Different demodulators are required for different types of transmission, and as a result some receivers may have a variety of demodulators that can be switched in to accommodate the different types of transmission that are to be encountered. The output from the demodulator is e.g. the recovered audio. This is passed into the audio stages where the LF-signal is amplified at the LF-amplifier 48 and output through e.g. speakers 49, in case audio radio signals have been received.

Some superhet radios have more than one frequency conversion, and may have additional circuitry to provide the required levels of performance.

One of the main advantages of superhet radios is that most of the radio's signal path has to be sensitive to only a narrow range of frequencies. Only the front end (the part before the frequency converter stage) needs to be sensitive to a wide frequency range. For example, the front end might need to be sensitive to 1-30 MHz, while the rest of the radio might need to be sensitive only to 455 kHz, a typical IF for amplitude modulation or to 10.7 MHz for frequency modulation.

In superhet receivers the selectivity of the receiver is determined by the IF stages, i.e. the IF-filter. Therefore, superhet receivers can achieve better selectivity than TRF receiver. Selectivity is a measure of the performance of a radio receiver to respond only to the tuned transmission (such as a radio station channel) and reject other signals nearby, such as another broadcast on an adjacent channel. Many of the filters used in radio receivers have very high levels of performance and enable radio receivers to select individual signals even in the presence of many close-by other signals.

In spite of the better selectivity of superhet receivers, radio signals from adjacent channels may still pass the pre-selection stage and the IF-filter stage and lead to noise in the demodulated information signal. The selected bandwidth of the IF-filter stage is controlled for achieving a good selectivity, low distortion, and possibly other characteristics. In order to attenuate interferences from a nearby station on an adjacent frequency, the bandwidth of the IF-filter may be narrowed. However, by doing so at the same time the distortion of the demodulation signals increases with the narrower bandwidth of the IF-filter stage. Conversely, a wider bandwidth attenuates demodulation signal distortion and thus may improve tone quality, but renders the receiver more susceptible to interference, especially if an input signal is weak or a high power nearby station is present.

Usually, a receiver can switch between at least two different bandwidths for the IF-filter, in order to take advantage of both aspects. In detail, in case no interference from an adjacent channel is present in the radio signal, the frequency bandwidth of the IF-filter can be maintained wide to lower the distortions. However, in case an adjacent channel causes noise in the radio signal, the frequency bandwidth of the IF-filter is narrowed so as to filter out the interference from said adjacent channel.

It is therefore important to reliably determine whether an adjacent channel is indeed generating noise in the radio signal. Otherwise, the switching of the frequency bandwidth in the intermediate filter may do more harm than good.

A receiver may have a detector for detecting the level of noise in the FM demodulated signal. There are different approaches in the state of the art to identify noise from adjacent channels. A usual noise blanker may be provided in said respect, or a multipath detector. However, these detectors for noise also respond to large frequency deviations which are misjudged as noise. Therefore, for signals which have large frequency deviations but no noise, the frequency bandwidth of the IF filter is also narrowed thus leading to a worse sound quality of the signal, e.g. having a great amount of distortion.

This is particularly disadvantageous for countries such as in eastern Europe where larger frequency deviations are often used. The frequency deviation is usually limited to e.g. 75 kHz in radio FM, whereas in eastern Europe frequency deviations up to 300 kHz can be encountered, naturally leading to malfunctions of the conventional noise detection.

The invention provides a way of reliably identifying noise coming from adjacent channels and thus allows to distinguish it from large frequency deviations for which no IF frequency bandwidth adaption should be performed.

The gist of the invention is to separately determine the positive fmax and negative part fmin of the frequency deviation of the frequency modulated signal and then to compare the absolute values of the positive and negative part with one another. For noise coming from an adjacent channel, the frequencies do not deviate from the carrier frequency in a symmetrical fashion, but with a tendency to the frequency of the adjacent channel's carrier frequency. In other words, one of the positive or the negative part of the frequency deviation will be substantially larger than the other.

In contrast thereto, large frequency deviations are symmetrical and thus exhibit in general the same amount of positive fmax and negative frequency deviation fmin. Therefore, in case the amount of frequency deviation is large and the positive and negative part are more or less identical, it can be inferred that a large frequency deviation is used for frequency modulating said radio signal.

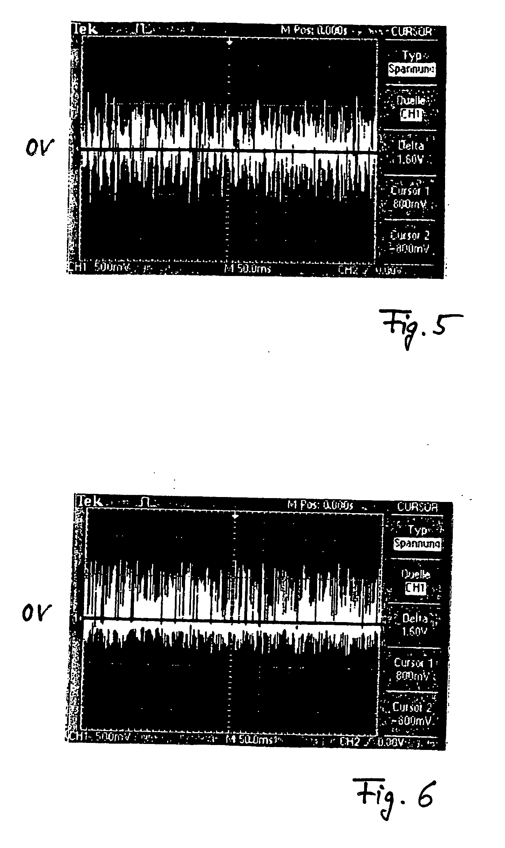

However, in practice the signal analysis is not performed on the received FM radio signal but on the demodulated signal, e.g. the MPX signal generated by the demodulator 47, because it's more efficient and less complex. As set out in the previous description, e.g. with regard to Fig. 2, the amplitude of the demodulated signal depends on the frequency deviation of the frequency modulated radio signal. Due to said dependency, it is possible to perform an analogous MPX signal analysis. This will be illustrated with Fig. 5 and 6.

Fig. 5 discloses an oscilloscope output of the MPX-signal, for a case the frequency modulation uses a large frequency deviation for modulation. Fig. 6 discloses an oscilloscope output of the MPX-signal, including interference from an adjacent channel and using a lower frequency deviation than the one of Fig. 5. Advantageously, the FM MPX signal is cleaned by blanking out interferences before performing the inventive method of detecting noise from an adjacent channel.

The horizontal line is in both Figures at 0 Volt, thus dividing the MPX-signal into a lower part and an upper part, i.e. negative and positive part. When comparing Fig. 5 and 6, it becomes apparent that the MPX signals of Fig. 5 and Fig. 6 have the same maximum deviation difference; in other words, the distance between the most negative and the most positive amplitude is the same. However, while the MPX signal of Fig. 5 is symmetrical with respect to the OV line, the MPX signal of Fig. 6 is asymmetrical. Therefore, in case the amount of deviation in the negative and the positive direction are determined separately and compared to one another, it is possible to distinguish between a large frequency deviation used for frequency modulation (Fig. 5) and an adjacent channel interference (Fig. 6) present in a signal using a lower more usual frequency deviation.

In Fig. 6 the negative part of the MPX signal represents the employed frequency deviation of the used frequency modulation. Compared thereto, the positive part of the MPX-signal of Fig. 6 is significantly larger due to interference from an adjacent channel. In this example the carrier frequency of the adjacent channel is larger than the carrier frequency of the radio signal, since it's the positive part of the MPX signal that is larger. Of course, the embodiments of the invention can be applied also to detect interference from an adjacent channel at a lower carrier frequency than the desired radio signal. In said case, the negative part of the MPX signal would be larger than the positive part (not shown).

In any case, by determining the positive part and the negative part of the MPX signal and comparing them, it is possible to reliably detect interference from an adjacent channel Furthermore, it is thus possible to easily distinguish between a large frequency deviation used for frequency modulation and the interference from adjacent channels.

When using a superhet receiver, this information may be used to lock the narrowing of the filter bandwidth for the intermediate frequency filter. More specifically, the bandwidth of the IF-filter is made smaller in case noise is detected, so as to attenuate the noise. However, as already explained, this is not desirable for large frequency deviations which are wrongly determined as noise. So either the new noise determination according to the above description is employed to solely control the bandwidth of the IF-filter.

Or, the inventive noise detection is used to lock the control of the IF-filter frequency bandwidth. In more detail, the usual noise determination is applied to the radio signal to control the frequency bandwidth of the IF-filter. In addition however, the inventive noise determination is carried out as well, so as to lock the frequency bandwidth of the IF filter to prevent the frequency bandwidth change in case the conventional noise determination wrongly determines the presence of noise in the radio signal when only a large frequency deviation is used for frequency modulation of the radio signal.

It is thus possible to control the IF filter, i.e. the change of its frequency bandwidth, in an improved way, so as to avoid that the bandwidth narrowing is wrongly applied to the radio signal, thus preventing deteriorated signal quality.

In the previous paragraphs various embodiments of the invention and variations thereof have been described. It would be appreciated by a person skilled in the art that numerous variations and/or modifications may be made to the present invention as shown in the specific embodiments.

It should be further noted that most of the embodiments have been outlined in relation to superhet receivers. However, the invention is not to be limited thereto.

**Claims**

1. A method for receiving a frequency modulated radio signal on a radio channel at a particular center frequency and determining whether the radio channel is affected by noise from an adjacent radio channel, the result of the determination being usable for the elimination of the noise in the radio signal, the method **characterized by** the steps of:

   determining over a pre-determined part of the received radio signal the extent of the frequency deviation above the center frequency and the extent of the frequency deviation below the center frequency, in case the frequency deviation extent below the center frequency is substantially different from the frequency deviation extent above the center frequency, determining that the radio signal is affected by noise from an adjacent radio channel.

2. The method for receiving a radio signal according to claim 1, wherein a large frequency deviation of the radio signal from the center frequency is to be distinguished from noise from an adjacent radio channel affecting the radio signal, wherein in case the frequency deviation extent below the center frequency is substantially the same as the frequency deviation extent above the center frequency, determining that the radio signal has a large frequency deviation.

3. A method for receiving a frequency modulated radio signal on a radio channel and determining whether the radio channel is affected by noise from an adjacent radio channel, the result of the determination being usable for the elimination of the noise in the radio signal, the method **characterized by** the steps of demodulating the received radio signal into an information signal, determining over a pre-determined part of the information signal the extent of the positive amplitude of the information signal and the extent of the negative amplitude of the information signal, in case the extent of the positive amplitude is substantially different from the extent of the negative amplitude, determining that the radio signal is affected by noise from an adjacent radio channel.

4. The method for receiving a radio signal according to claim 3, wherein a large frequency deviation from a center frequency used for frequency modulating the radio signal is to be distinguished from noise from an adjacent radio channel affecting the radio signal, wherein in case the extent of the positive amplitude is substantially the same as the extent of the negative amplitude, determining that the radio signal has a large frequency deviation.

5. The method for receiving a radio signal according to claim 3 or 4, wherein the difference between the extent of the positive amplitude and the negative amplitude is compared against a threshold, and in case the threshold is not exceeded, determining that the radio signal has a large frequency deviation.

6. The method for receiving a radio signal according to one of claims 1 to 5, wherein a band pass filter with a pre-determined frequency band around the center frequency of the radio signal is provided to filter noise from an adjacent radio channel out of the radio signal, and wherein in case it is determined that the radio signal is affected by noise from an adjacent radio channel, changing the band pass filter to a second frequency band around the center frequency, the second frequency band being narrower than the pre-determined frequency band.

7. The method for receiving a radio signal according to claim 6, wherein in case it is determined that the radio signal has a large frequency deviation, maintaining the pre-determined frequency band of the band pass filter.

8. The method for receiving a radio signal according to one of claims 3 to 7, wherein interferences of the radio signal are blanked out before determining the extent of positive and negative amplitude.

9. The method for receiving a radio signal according to one of claims 1 to 8, wherein the method is usable in a superheterodyne receiver.

10. The method for receiving a radio signal according to one of claims 1, 2, 4 to 9, wherein the center frequency is an intermediate frequency, obtained by mixing a carrier frequency of the radio signal with a pre-determined second frequency, or a carrier frequency of the radio signal.

11. A radio receiver for receiving a frequency modulated radio signal via a radio channel, adapted to perform the method according to one of claims 1 to 10.

**Patentansprüche**

1. Ein Verfahren zum Empfangen eines frequenzmodulierten Radiosignals auf einem Radiokanal bei einer bestimmten Mittenfrequenz und zum Bestimmen ob der Radiokanal durch Rauschen von einem benachbarten Radiokanal beeinträchtigt ist, wobei das Ergebnis der Bestimmung verwendbar ist für die Beseitigung des Rauschens in dem Radiosignal, wobei das Verfahren **gekennzeichnet ist durch** die Schritte:

Bestimmen, über einen vorherbestimmten Teil des empfangenen Radiosignals, des Ausmaßes der Frequenzabweichung oberhalb der Mittenfrequenz und des Ausmaßes der Frequenzabweichung unterhalb der Mittenfrequenz, im Falle, dass das Frequenzabweichungsausmaß unterhalb der Mittenfrequenz wesentlich unterschiedlich ist von dem Frequenzabweichungsausmaß oberhalb der Mittenfrequenz, Bestimmen, dass das Radiosignal **durch** Rauschen von einem benachbarten Radiokanal beeinträchtigt ist.

2. Das Verfahren zum Empfangen eines Radiosignals gemäß Anspruch 1, wobei eine große Frequenzabweichung des Radiosignals von der Mittenfrequenz zu unterscheiden ist von Rauschen von einem benachbarten Radiokanal, das das Radiosignal beeinträchtigt, wobei im Falle, dass das Frequenzabweichungsausmaß unterhalb der Mittenfrequenz im Wesentlichen gleich dem Frequenzabweichungsausmaß oberhalb der Mittenfrequenz ist, bestimmt wird, dass das Radiosignal eine große Frequenzabweichung aufweist.

3. Ein Verfahren zum Empfangen eines frequenzmodulierten Radiosignals auf einem Radiokanal und zum Bestimmen ob der Radiokanal durch Rauschen von einem benachbarten Radiokanal beeinträchtigt ist, wobei das Ergebnis der Bestimmung verwendbar ist für die Beseitigung des Rauschens in dem Radiosignal, wobei das Verfahren **gekennzeichnet ist durch** die Schritte von:

Demodulieren des empfangenen Radiosignals in ein Informationssignal, Bestimmen, über einen vorherbestimmten Teil des Informationssignals, des Ausmaßes einer positiven Amplitude des Informationssignals und des Ausmaßes der negativen Amplitude des Informationssignals, im Falle, dass das Ausmaß der positiven Amplitude wesentlich unterschiedlich ist von dem Ausmaß der negativen Amplitude, Bestimmen, dass das Radiosignal durch Rauschen von einem benachbarten Radiokanal beeinträchtigt ist.

4. Das Verfahren zum Empfangen eines Radiosignals gemäß Anspruch 3, wobei eine große Frequenzabweichung von einer Mittenfrequenz, die zur Frequenzmodulation des Radiosignals verwendet wird, zu unterscheiden ist von Rauschen von einem benachbarten Radiokanal, das das Radiosignal beeinträchtigt, wobei im Falle, dass das Ausmaß der positiven Amplitude im Wesentlichen gleich dem Ausmaß der negativen Amplitude ist, bestimmt wird, dass das Radiosignal eine große Frequenzabweichung aufweist.

5. Das Verfahren zum Empfangen eines Radiosignals gemäß dem Anspruch 3 oder 4, wobei der Unterschied zwischen dem Ausmaß der positiven Amplitude und der negativen Amplitude mit einem Grenzwert verglichen wird und im Falle, dass der Grenzwert nicht überschritten wird, bestimmt wird, dass das Radiosignal eine große Frequenzabweichung aufweist.

6. Das Verfahren zum Empfangen eines Radiosignals gemäß einem der Ansprüche 1 bis 5, wobei ein Bandpassfilter mit einem vorherbestimmten Frequenzband um die Mittenfrequenz des Radiosignals vorgesehen ist, um Rauschen von einem benachbarten Radiokanal aus dem Radiosignal zu filtern, und wobei im Falle, dass bestimmt wird, dass das Radiosignal durch Rauschen von einem benachbarten Radiokanal beeinträchtigt ist, der Bandpassfilter zu einem zweiten Frequenzband um die Mittenfrequenz geändert wird, wobei das zweite Frequenzband schmäler ist als das vorherbestimmte Frequenzband.

7. Das Verfahren zum Empfangen eines Radiosignals gemäß Anspruch 6, wobei im Falle, dass bestimmt wird, dass das Radiosignal eine große Frequenzabweidung aufweist, das vorherbestimmte Frequenzband des Bandpassfilters beibehalten wird.

8. Das Verfahren zum Empfangen eines Radiosignals gemäß einem der Ansprüche 3 bis 7, wobei Interferenzen des Radiosignals ausgeblendet werden, bevor das Ausmaß der positiven und negativen Amplitude bestimmt wird.

9. Das Verfahren zum Empfangen eines Radiosignals gemäß einem der Ansprüche 1 bis 8, wobei das Verfahren verwendbar ist in einem Überlagerungsempfänger.

10. Das Verfahren zum Empfangen eines Radiosignals gemäß einem der Ansprüche 1, 2, 4 bis 9, wobei die Mittenfrequenz eine Zwischenfrequenz ist, die erhalten wird durch das Vermischen einer Trägerfrequenz des Radiosignals mit einer vorherbestimmten zweiten Frequenz, oder eine Trägerfrequenz des Radiosignals ist.

**11.** Ein Radioempfänger zum Empfangen eines frequenzmodulierten Radiosignals durch einen Radiokanal, angepasst um das Verfahren gemäß einem der Ansprüche 1 bis 10 auszuführen.

## Revendications

**1.** Procédé permettant de recevoir un signal radio modulé en fréquence sur un canal radio à une fréquence centrale particulière et de déterminer si le canal radio est affecté par du bruit provenant d'un canal radio adjacent, le résultat de la détermination pouvant être utilisé pour l'élimination du bruit dans le signal radio, le procédé
étant **caractérisé par** les étapes consistant à :

   déterminer sur une partie prédéfinie du signal radio reçu l'importance de l'écart de fréquence au-dessus de la fréquence centrale et l'importance de l'écart de fréquence en dessous de la fréquence centrale,
   déterminer, dans le cas où l'importance de l'écart de fréquence en dessous de la fréquence centrale est sensiblement différente de l'importance de l'écart de fréquence au-dessus de la fréquence centrale, que le signal radio est affecté par du bruit provenant d'un canal radio adjacent.

**2.** Procédé permettant de recevoir un signal radio selon la revendication 1, dans lequel un écart de fréquence important du signal radio par rapport à la fréquence centrale doit être distingué du bruit provenant d'un canal radio adjacent affectant le signal radio, dans lequel, dans le cas où l'importance de l'écart de fréquence en dessous de la fréquence centrale est sensiblement identique à l'importance de l'écart de fréquence au-dessus de la fréquence centrale, il est déterminé que le signal radio présente un important écart de fréquence.

**3.** Procédé permettant de recevoir un signal radio modulé en fréquence sur un canal radio et de déterminer si le canal radio est affecté par du bruit provenant d'un canal radio adjacent, le résultat de la détermination pouvant être utilisé pour l'élimination du bruit dans le signal radio, le procédé
étant **caractérisé par** les étapes consistant à :

   démoduler le signal radio reçu en un signal d'informations,
   déterminer sur une partie prédéfinie du signal d'informations l'importance de l'amplitude positive du signal d'informations et l'importance de l'amplitude négative du signal d'informations,
   déterminer, dans le cas où l'importance de l'amplitude positive et sensiblement différente de l'importance de l'amplitude négative, que le signal radio est affecté par du bruit provenant d'un canal radio adjacent.

**4.** Procédé permettant de recevoir un signal radio selon la revendication 3, dans lequel un important écart de fréquence par rapport à la fréquence centrale utilisée pour moduler en fréquence le signal radio doit être distingué du bruit provenant d'un canal radio adjacent affectant le signal radio, dans lequel, dans le cas ou l'importance de l'amplitude positive et sensiblement identique à l'importance de l'amplitude négative, il est déterminé que le signal radio présente un important écart de fréquence.

**5.** Procédé permettant de recevoir un signal radio selon la revendication 3 ou 4, dans lequel la différence entre l'importance de l'amplitude positive et de l'amplitude négative est comparée par rapport à un seuil, et
il est déterminé, dans le cas où le seuil n'est pas dépassé, que le signal radio présente un important écart de fréquence.

**6.** Procédé permettant de recevoir un signal radio selon l'une des revendications 1 à 5, dans lequel un filtre passe bande présentant une bande de fréquences prédéfinie autour de la fréquence centrale du signal radio est prévu afin de filtrer hors du signal radio le bruit provenant d'un canal radio adjacent, et dans lequel
dans le cas où il est déterminé que le signal radio est affecté par du bruit provenant d'un canal radio adjacent, modifier le filtre passe bande pour une seconde bande de fréquences autour de la fréquence centrale, la seconde bande de fréquences étant plus étroite que la bande de fréquences prédéfinie.

**7.** Procédé permettant de recevoir un signal radio selon la revendication 6, dans lequel, dans le cas où il est déterminé que le signal radio présente un important écart de fréquence, la bande de fréquences prédéfinie du filtre passe bande est maintenue.

**8.** Procédé permettant de recevoir un signal radio selon l'une des revendications 3 à 7, dans lequel les interférences du signal radio sont supprimées avant de déterminer l'importance de l'amplitude positive et négative.

**9.** Procédé permettant de recevoir un signal radio selon l'une des revendications 1 à 8, dans lequel le procédé est utilisable dans un récepteur superhétérodyne.

**10.** Procédé permettant de recevoir un signal radio selon l'une des revendications 1, 2, 4 à 9, dans lequel la fréquence centrale est une fréquence intermédiaire obtenue en mélangeant la fréquence de porteuse du signal radio avec une seconde fréquence prédéfinie, ou bien une fréquence de porteuse du signal radio.

11. Récepteur radio permettant de recevoir un signal radio modulé en fréquence par l'intermédiaire d'un canal radio conçu pour exécuter le procédé conforme à l'une des revendications 1 à 10.

**Carrier**

**Modulating Wave**

**Modulated Result**

# Fig. 1

$U_{carrier\ signal}$

frequency deviation $\Delta f$

modulated carrier signal

$f_{min}$

$f_{car}$

$f_{max}$

$\rightarrow$ f

$\rightarrow U_{modulation\ wave}$

$$\Delta f = \frac{f_{max} - f_{min}}{2}$$

t

modulating wave

# Fig. 2

Fig. 3

Fig. 4

*Fig. 5*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6738606 B1